# EUROPEAN PATENT APPLICATION

(11) **EP 4 620 560 A1**
(43) Date of publication of application: **24.09.2025**
(21) Application number: 24218910.8
(22) Date of filing: 11.12.2024
(51) Int. Cl.: B01F 27/2123, B01F 27/85, B01F 27/93, B01F 27/95, B01F 27/96, B01F 35/11, B01F 35/13

(54) **SLURRY MIXING APPARATUS**

(30) Priority: 20.03.2024 KR 20240038402
(71) Applicant: SAMSUNG SDI CO., LTD., Yongin-si, Gyeonggi-do 17084 (KR)
(72) Inventor: Lee, Hyunjin, 17084 Yongin-si, Gyeonggi-do (KR)
(74) Representative: Gulde & Partner

(57) **Abstract**

A slurry mixing apparatus (100) comprising:
an agitator (110) rotatably mounted in a ceiling part of the slurry mixing apparatus and configured to revolve around a first revolution axis (20) thereof while rotating around a first rotation axis (11) thereof;
a distributor (120) rotatably mounted in the ceiling part of the slurry mixing apparatus and configured to revolve around a second revolution axis (21) while rotating around a second rotation axis (12);
a driver (130) configured to provide a rotational force to the agitator (110) and the distributor (120);
a container (140) configured to accommodate a slurry to be mixed by the agitator (110)
and the distributor (120); and
a liquid supply part (150) arranged in at least one of the ceiling part, the agitator (110), the distributor (120), and the container (140) and configured to provide a liquid.

## Description

### BACKGROUND

### 1. Field

Aspects of embodiments of the present disclosure relate to a slurry mixing apparatus.

### 2. Description of the Related Art

Different from primary batteries, which are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as in hybrid vehicles or electric vehicles, and for power storage.

In a method of manufacturing a secondary battery, an electrode may be formed by using an application method including applying, on a current collector, a slurry for an electrode including an electrode active material, a conductive material, a binder, and a solvent that dissolves the binder, for example, and drying the slurry. When the slurry for an electrode is manufactured, a liquid slurry mixture having viscosity suitable for application while having a material characteristic that may be used as an electrode for a battery may be manufactured by physically, uniformly dispersing and mixing mixed materials that include the electrode active material, the conductive material, the binder, and the solvent and that variously are in a liquid phase and a powder phase.

Generally, a slurry mixing apparatus called a slurry mixer is used to manufacture a slurry mixture by mixing mixed materials.

The above information disclosed in this Background section is for enhancement of understanding of the background of the present disclosure, and therefore, it may contain information that does not constitute the related (or prior) art.

### SUMMARY

In a conventional slurry mixing apparatus, some of slurry remains after the mixing of the slurry is terminated and the volume of a slurry residue may continuously increase over time. Further, the slurry residue has a negative effect on the quality of the slurry. Accordingly, embodiments of the present disclosure provide a slurry mixing apparatus including a liquid supply part (e.g., a liquid provision part) that uses a liquid to remove slurry residue to minimize the slurry residue in the slurry mixing apparatus.

However, the aspects and features of the present disclosure are not limited to those mentioned above, and other aspects and features not mentioned herein will be clearly understood by those skilled in the art from the description of the present disclosure below.

The present disclosure relates to a slurry mixing apparatus, which is configured to mix a slurry by using rotation and revolution includes an agitator (rotatably mounted) in a ceiling part of the slurry mixing apparatus and configured to revolve around a first revolution axis thereof while rotating around a first rotation axis thereof, a distributor (rotatably mounted) in the ceiling part of the slurry mixing apparatus and configured to revolve around a second revolution axis while rotating around a second rotation axis, a driver configured to provide a rotational force to the agitator and the distributor, a container configured to accommodate a slurry that is mixed by the agitator and the distributor, and a liquid supply part in at least one of the ceiling part, the agitator, the distributor, and the container of the slurry mixing apparatus and configured to provide a liquid.

A slurry residue present in the slurry mixing apparatus after the mixing of slurry may be reduced or prevented by including a liquid supply part that provides a liquid to one or more of the agitator, the distributor, and the container.

Preferably, the liquid supply part may comprise a liquid sprayer configured to spray the liquid, and a flow channel along which the liquid is configured to flow.

In a preferred embodiment, the slurry mixing apparatus may further comprise a residue removal part arranged in the ceiling part or in the container and configured to remove a slurry residue that remains on an upper part of the slurry mixing apparatus or in the container, respectively.

Preferably, the residue removal part may be a rotating body configured to remove the slurry residue while rotating or may be an auxiliary blade configured to remove the slurry residue while performing a reciprocating motion.

More preferred, the rotating body may comprise two to six wings.

Said residue removal part may comprise a plurality of the residue removal parts that are spaced apart from each other. Preferably, the residue removal parts are spaced apart from each other at a first interval or more.

In addition or in alternative, the residue removal part (or plurality of residue removal parts) may be spaced apart from the agitator or the distributor, preferably, at a second interval or more. In other words, at least one residue removal part may be arranged between the agitator and the distributor.

Preferably, the residue removal part may be made of a metal or a silicon material.

In a preferred embodiment, the agitator may comprise an agitating blade having a screw configuration twisted in a vertical direction.

In another preferred embodiment, the distributor may comprise a plurality of distribution blades.

Preferably, the distribution blades may have different diameters from each other.

More preferred, a diameter of each of the distribution blades may increase from an upper part thereof toward a lower part thereof.

Preferably, a ratio of a diameter of a highest one of the distribution blades and a diameter of a lowest one of the distribution blades from among the distribution blades may be in a range of 1:1 to 1:10.

The abovesaid embodiments may be combined to advantage.

The slurry mixing apparatus, according to embodiments of the present disclosure, reduces a manufacturing and operation time because a manual cleaning process can be omitted due to a reduction in the slurry residue.

Furthermore, according to embodiments of the present disclosure, cost can be reduced because a slurry can be manufactured without a loss of raw material. Further, a difference between the amount of an input material and a design recipe can be prevented because the slurry is well mixed and the slurry reside is reduced, and thus, a smaller amount of the material than a target design value is used. Accordingly, the slurry can be manufactured closer to the ratio of a raw material in the design of a target electrode plate.

However, aspects and features of the present disclosure are not limited to the aforementioned aspects and features, and other aspects and features not expressly described above may be understood by those skilled in the art from the following description.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a schematic illustration of a slurry mixing apparatus according to an embodiment of the present disclosure.
FIG. 2 is a schematic cross section diagram of a liquid supply part of the slurry mixing apparatus according to an embodiment of the present disclosure.
FIG. 3 is a schematic illustration of a slurry mixing apparatus including a residue removal part according to an embodiment of the present disclosure.
FIGS. 4A-4E illustrate examples of a rotating body as the residue removal part of the slurry mixing apparatus according to various embodiments of the present disclosure.
FIGS. 5A and 5B are illustrate examples of an auxiliary blade as the residue removal part of the slurry mixing apparatus according to various embodiments of the present disclosure.
FIG. 6 is a schematic illustration of a slurry mixing apparatus including a plurality of distribution blades according to an embodiment of the present disclosure.
FIG. 7 is a schematic illustration of a slurry mixing apparatus including a plurality of distribution blades having different diameters according to an embodiment of the present disclosure.

### DETAILED DESCRIPTION

Hereinafter, some embodiments of the present disclosure will be described with reference to the accompanying drawings. Unless otherwise defined, all terms (including technical and scientific terms) used herein have the same meaning as commonly understood by one of ordinary skill in the art to which the present inventive concept belongs. It will be further understood that terms, such as those defined in commonly used dictionaries, should be interpreted as having a meaning that is consistent with their meaning in the context of the relevant art and/or the present specification and should not be interpreted in an idealized or overly formal sense, unless expressly so defined herein.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

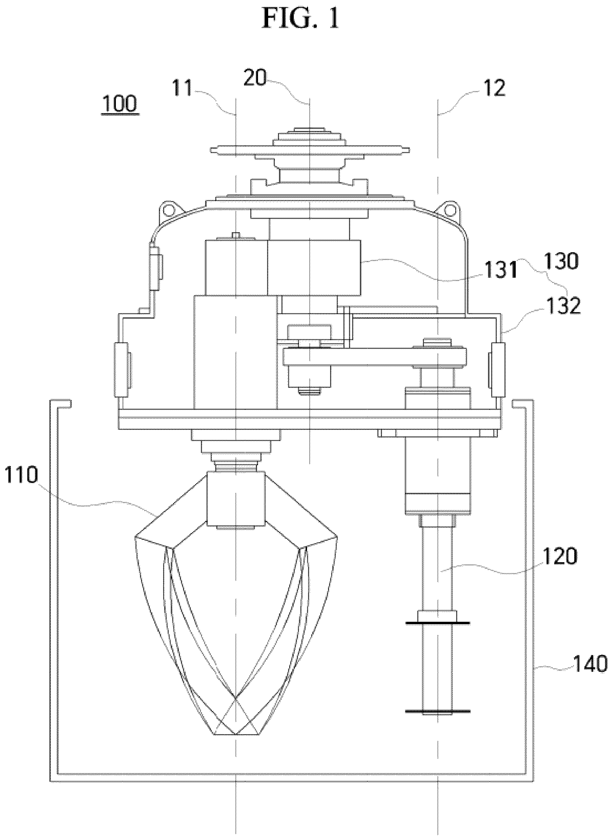

FIG. 1 is a diagram illustrating a slurry mixing apparatus according to an embodiment of the present disclosure.

Referring to FIG. 1, a slurry mixing apparatus 100 according to an embodiment of the present disclosure may include an agitating part (e.g., an agitator) 110, a distribution part (e.g., a distributor) 120, a driving part (e.g., a driver) 130, a container 140, and a liquid supply part (e.g., a liquid provision part). The slurry mixing apparatus 100 illustrated in FIG. 1 is an example embodiment. The components of the slurry mixing apparatus 100 according to other embodiments of the present disclosure are not limited to the embodiment illustrated in FIG. 1. Some components may be added to the slurry mixing apparatus 100, and some of the components of the slurry mixing apparatus 100 may be changed or omitted.

The agitating part 110 may agitate mixed materials that are in a liquid phase and a powder phase and that include (e.g., are composed of) an electrode active material, a conductive material, a binder, and a solvent. The agitating part 110 may be provided (rotatably mounted) in a ceiling part (e.g., a top part) of the slurry mixing apparatus 100 and may perform a meteoric movement (e.g., an orbital-style movement or whirl) in which the agitating part revolves around a revolution axis thereof while rotating around a first rotation axis thereof so that the mixed materials are uniformly mixed. In other words, the agitating part 110 is rotatably mounted at a mounting point with the ceiling part (e.g., a top part) of the slurry mixing apparatus 100. The agitating part 110 is configured to rotate around a first rotation axis, which goes through the mounting point of the agitating part 110 with the ceiling part and through a (symmetrical) center point of the agitating part 110. The agitating part 110 is further configured to rotate around a (first) revolution axis, which goes through the mounting point of the agitating part 110 with the ceiling part and a (fictive) point different from the (symmetrical) center point of the agitating part 110, wherein the agitating part 110 rotates around said (first) revolution axis with an increasing radial distance the further away a reference point on the agitating part 110 is from the mounting point.

Same applies for the distributor 120, wherein the distributor 120 is rotatably mounted at a mounting point with the ceiling part (e.g., a top part) of the slurry mixing apparatus 100. The distributor 120 is configured to rotate around a second rotation axis, which goes through the mounting point of the distributor 120 with the ceiling part and through a (symmetrical) center point of the distributor 120. The distributor 120 is further configured to rotate around a (second) revolution axis, which goes through the mounting point of the distributor 120 with the ceiling part and a (fictive) point different from the (symmetrical) center point of the distributor 120, wherein the distributor 120 rotates around said (second) revolution axis with an increasing radial distance the further away a reference point on the distributor 120 is from the mounting point.

In an embodiment, the agitating part 110 may include an agitating blade having a screw form or shape in which the agitating blade is twisted in a vertical direction. Furthermore, in an embodiment, the agitating part 110 may include two or more agitating blades.

The distribution part 120 may be provided in the ceiling part of the slurry mixing apparatus 100 and may perform a meteoric movement in which the distribution part revolves around the revolution axis thereof while rotating around a second rotation axis thereof so that the mixed materials are uniformly mixed. Generally, if the mixed materials are mixed by using only the agitating part 110, a phenomenon in which particles are bound may occur because an efficient distribution does not occur within a short time. The distribution part 120 may include a distribution blade and may disperse the mixed materials that have been bound by generating a strong shearing force as the distribution blade is rotated at high speed. In an embodiment, the distribution blade may have a disc shape having a saw-toothed blade. When the distribution blade is rotated at high speed, strong turbulence may be locally formed so that a strong distribution and cracking effect may be provided to (or imparted to) the mixed materials.

The driving part 130 may provide a rotational force to the agitating part 110 and the distribution part 120. The driving part 130 may include a motor 131 and a rotation conversion part 132. The motor 131 may provide a driving force. The rotation conversion part 132 may convert the driving force of the motor into a rotational force and a revolving force with respect to the agitating part 110 and the distribution part 120.

The container 140 may contain a slurry that is mixed by the agitating part 110 and the distribution part 120. In an embodiment, the container 140 has a circle shape on a plane so that the agitating part 110 and the distribution part 120 can perform rotation and revolution movements within the container.

The liquid supply part may be provided (integrated) in at least one of the ceiling part of the slurry mixing apparatus 100, the agitating part 110, the distribution part 120, and the container 140, and is configured to provide a liquid. After mixing is terminated (or finished), the liquid supply part may ensure a slurry residue that has been attached to the ceiling part of the slurry mixing apparatus 100, the agitating part 110, the distribution part 120, and the container 140 fall off. In an embodiment, the liquid may be water. A wash liquid may be added to the liquid. The liquid supply part may be provided in a part of any one of the ceiling part of the slurry mixing apparatus 100, the agitating part 110, the distribution part 120, and the container 140. In an embodiment, the liquid supply part may be provided in the agitating part 110 or the distribution part 120 and may cause a slurry residue that has been attached to the agitating part 110 or the distribution part 120 fall off by using the liquid. Furthermore, the liquid supply part may be provided at the ceiling part of the slurry mixing apparatus 100 or the bottom of the container 140 and may cause a slurry residue that is attached to the ceiling part of the slurry mixing apparatus 100 or the bottom of the container 140 fall off by using the liquid.

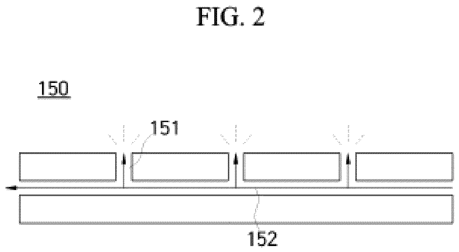

In an embodiment, the liquid supply part may have a structure for providing the liquid to a surface of the ceiling part of the slurry mixing apparatus 100, the agitating part 110, the distribution part 120, or the container 140. An example of the structure of the liquid supply part may be described with reference to FIG. 2.

FIG. 2 is a cross-sectional diagram of the liquid supply part of the slurry mixing apparatus according to an embodiment of the present disclosure.

Referring to FIG. 2, a liquid supply part 150 of the slurry mixing apparatus 100 according to an embodiment of the present disclosure may include a liquid spray part (e.g., a liquid sprayer) 151 and a flow channel 152. The liquid spray part 151 may spray a liquid toward (or to) surfaces of the agitating part 110, the distribution part 120, and the container 140 so that a slurry residue falls off due to the liquid. The flow channel 152 may allow the liquid to flow on (or along) the lower part of a surface thereof so that the liquid can be sprayed through the liquid spray part 151.

The liquid supply part 150 may cause a slurry residue that is (or has been) attached to one or more of the agitating part 110, the distribution part 120, and the container 140 fall off by using a liquid. Accordingly, a cleaning process, such as a separate manual cleaning process, after the mixing is terminated can be omitted or minimized because internal cleaning efficiency of the slurry mixing apparatus 100 is improved.

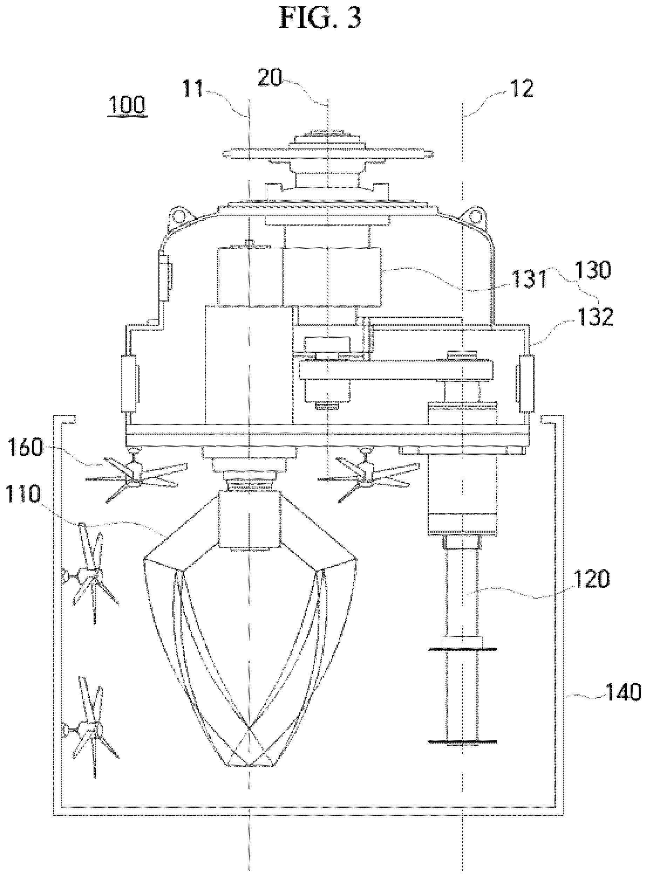

FIG. 3 is a diagram illustrating a slurry mixing apparatus including a residue removal part according to an embodiment of the present disclosure.

Referring to FIG. 3, the slurry mixing apparatus 100 according to an embodiment of the present disclosure may further include one or more residue removal parts 160. The residue removal part 160 may be provided in a part of (e.g., an area of) the ceiling part of the slurry mixing apparatus 100 or the container 140 and may remove a slurry residue that remains on an upper part of the slurry mixing apparatus 100 or in the container 140.

In an embodiment, if two or more residue removal parts 160 are provided, they may be spaced apart from each other at first intervals or more, which may prevent the residue removal parts 160 from being damaged due to mutual interference. For example, a distance between the residue removal parts 160 may be (about) 1 cm or more. Furthermore, the residue removal part 160 and the agitating part 110 or the residue removal part 160 and the distribution part 120 may be spaced apart from each other at second intervals or more, which may prevent the residue removal part 160 from being damaged due to interference with the agitating part 110 or the distribution part 120. For example, a distance between the residue removal part 160 and the agitating part 110 or the residue removal part 160 and the distribution part 120 may be in a range of (about) 1 cm to (about) 5 cm.

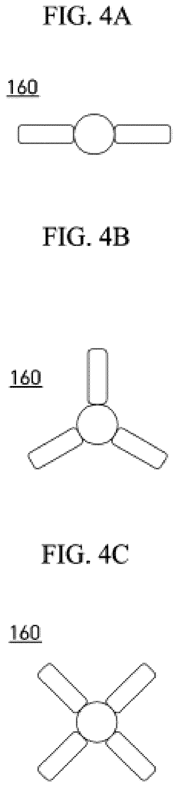

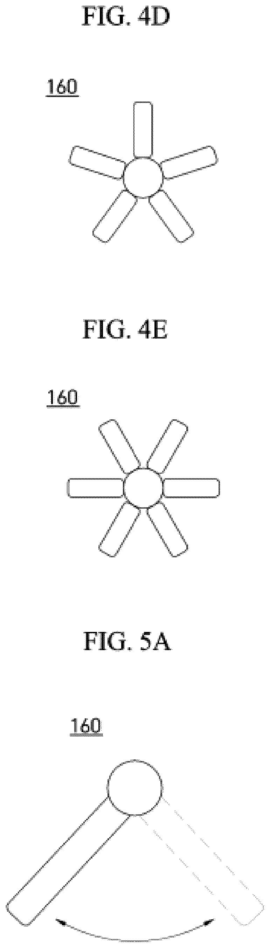

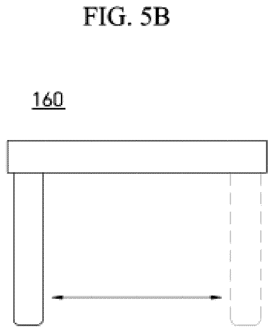

In an embodiment, the residue removal part 160 may include (or may be) a metal or silicon material. Hereinafter, examples of the residue removal part 160 will be described with reference to FIGS. 4A-4E, 5A, and 5B.

FIGS. 4A-4E are diagrams illustrating examples of a rotating body as an example of the residue removal part of the slurry mixing apparatus according to an embodiment of the present disclosure.

FIGS. 4A-4E illustrate examples of a residue removal part 160 of the slurry mixing apparatus 100 as a rotating body according to an embodiment of the present disclosure. When the residue removal part 160 is the rotating body, the residue removal part 160 may remove a slurry residue while rotating. Referring to FIGS. 4A to 4E, the rotating body may include two to six wings and may effectively remove a slurry residue while rotating. If the number of wings is greater than six, removal efficiency of a slurry residue may be reduced because the slurry residue is attached between (e.g., is trapped between) the wings.

FIGS. 5A and 5B are diagrams illustrating examples of an auxiliary blade as the residue removal part of the slurry mixing apparatus according to an embodiment of the present disclosure.

FIGS. 5A and 5B illustrate the residue removal part 160 of the slurry mixing apparatus 100 according to an embodiment of the present disclosure as an auxiliary blade. When the residue removal part 160 is the auxiliary blade, the residue removal part may remove a slurry residue while performing a reciprocating motion. In such an embodiment, the auxiliary blade may perform a reciprocating motion centering around a rotating axis thereof as illustrated in FIG. 5A or may perform a reciprocating motion along a rail (e.g., a linear reciprocating motion) thereof as illustrated in FIG. 5B.

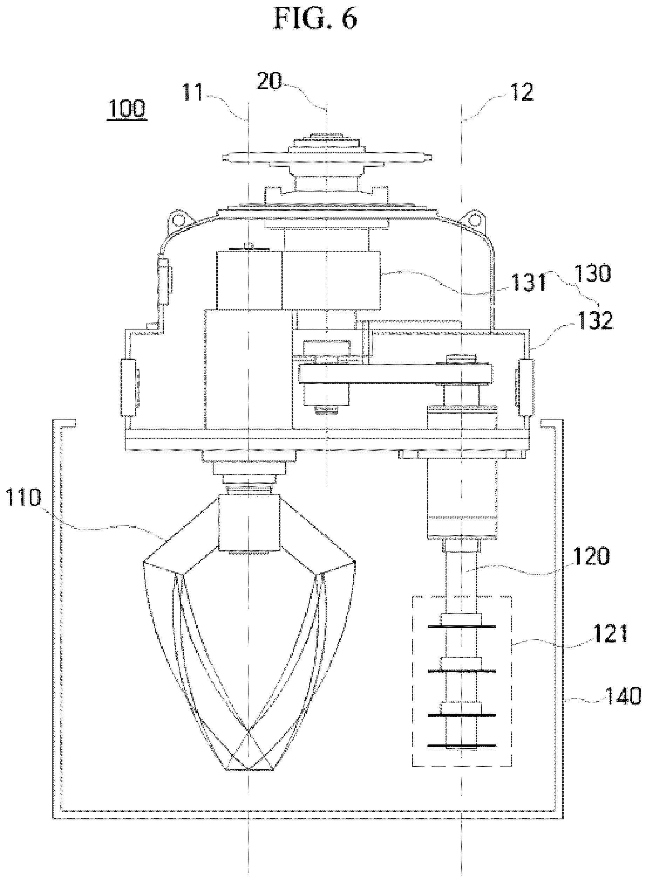

FIG. 6 is a diagram illustrating a slurry mixing apparatus including a plurality of distribution blades according to an embodiment of the present disclosure.

Referring to FIG. 6, the distribution part 120 of the slurry mixing apparatus 100 according to an embodiment of the present disclosure may include a plurality of distribution blades 121. FIG. 6 illustrates an embodiment in which the number of distribution blades 121 is four. The distribution part 120 may include a plurality of distribution blades 121 to improve or maximize distribution efficiency because a volume in which the distribution blades 121 rotate at high speed and mix the slurry together other is increased.

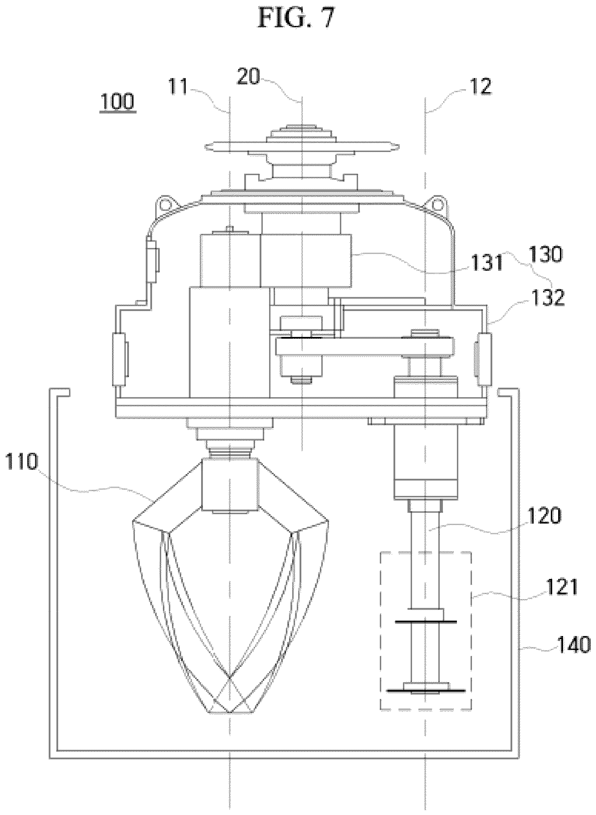

FIG. 7 is a diagram illustrating a slurry mixing apparatus including distribution blades have different diameters in according to an embodiment of the present disclosure.

Referring to FIG. 7, a plurality of distribution blades 121 of the distribution part 120 of the slurry mixing apparatus 100 according to an embodiment of the present disclosure may have different diameters from each other. In such an embodiment, distribution efficiency at the same rotations per minute (RPM) can be improved or maximized by the different distances between the agitating part 110 and each of the distribution blades 121 due to the different diameters of the distribution blades 121. In an embodiment, the diameter of each of the distribution blades 121 may increase from an upper part thereof toward a lower part. Generally, the agitating blade of the agitating part 110 may have a screw shape that narrows from an upper part thereof toward a lower part. Accordingly, when the diameter of each of the distribution blades 121 increases from an upper part thereof toward a lower part thereof, distribution efficiency may be improved. In an embodiment, a ratio of the diameter of the highest distribution blade 121 and the diameter of the lowest distribution blade 121 from among the distribution blades 121 may be in a range of (about) 1:1 to (about) 1:10. If the diameter of the lowest distribution blade 121 has a diameter beyond the above-described ratio, interference with the agitating blade of the agitating part 110 may occur.

Hereinafter, materials which may be used in slurry that is mixed in the slurry mixing apparatus according to an embodiment of the present disclosure will be described.

A compound (e.g., a lithiated intercalation compound) capable of reversible intercalation and deintercalation of lithium may be used as a positive electrode active material. For example, one or more types selected from among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LIₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material and may include a binder and/or a conductive material.

Content of the positive electrode active material may be in a range of (about) 90 wt.% to (about) 99.5 wt.% with respect to the positive electrode active material layer 100 wt.%. Content of the binder and the conductive material may be in a range of (about) 0.5 wt.% to (about) 5 wt.% with respect to the positive electrode active material layer 100 wt.%.

Al may be used as the current collector, but the present disclosure is not limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material and may include a binder and/or a conductive material.

For example, the negative electrode active material layer may include the negative electrode active material in a range of (about) 90 wt.% to (about) 99 wt.%, the binder in a range of (about) 0.5 wt.% to (about) 5 wt.%, and the conductive material in a range of (about) 0 wt.% to (about) 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected from among nickel foil, stainless steel foil, titanium foil, nickel foam, copper foam, a polymer base on which a conductive metal has been coated, and a combination of them may be used as a current collector for the negative electrode.

Although the present disclosure has been described above in connection with some embodiments thereof, the present disclosure is not limited to these embodiments. A person having ordinary knowledge in the art to which the present disclosure pertains may modify and change the present disclosure within the technical scope of the present disclosure as defined by the following claims and their equivalents.

**List of Reference Signs**

| | | | |
|---|---|---|---|
| 11: | first rotation axis | 12: | second rotation axis |
| 20: | first revolution axis | 21: | second revolution axis |
| 110: | agitator | 120: | distributor |
| 121: | distribution blade | 130: | driver |
| 131: | motor | 132: | rotation conversion part |
| 140: | container, | 150: | liquid supply part |
| 151: | liquid sprayer | 152: | flow channel |
| 160: | residue removal part | 100: | slurry mixing apparatus |

## Claims

1. A slurry mixing apparatus (100) comprising:
an agitator (110) rotatably mounted in a ceiling part of the slurry mixing apparatus and configured to revolve around a first revolution axis (20) thereof while rotating around a first rotation axis (11) thereof;
a distributor (120) rotatably mounted in the ceiling part of the slurry mixing apparatus and configured to revolve around a second revolution axis (21) while rotating around a second rotation axis (12);
a driver (130) configured to provide a rotational force to the agitator (110) and the distributor (120);
a container (140) configured to accommodate a slurry to be mixed by the agitator (110) and the distributor (120); and
a liquid supply part (150) arranged in at least one of the ceiling part, the agitator (110), the distributor (120), and the container (140) and configured to provide a liquid.

2. The slurry mixing apparatus of claim 1, wherein the liquid supply part (150) comprises:
a liquid sprayer (151) configured to spray the liquid; and
a flow channel (152) along which the liquid is configured to flow.

3. The slurry mixing apparatus of claims 1 or 2, further comprising a residue removal part (160) arranged in the ceiling part or in the container (140) and configured to remove a slurry residue that remains on an upper part of the slurry mixing apparatus or in the container (140), respectively.

4. The slurry mixing apparatus of claim 3, wherein the residue removal part (160) is a rotating body configured to remove the slurry residue while rotating or is an auxiliary blade configured to remove the slurry residue while performing a reciprocating motion.

5. The slurry mixing apparatus of claim 4, wherein the rotating body comprise two to six wings.

6. The slurry mixing apparatus of claim 3, wherein the residue removal part (160) comprises a plurality of the residue removal parts (160) that are spaced apart from each other.

7. The slurry mixing apparatus of one of claims 3 to 6, wherein the residue removal part (160) is spaced apart from the agitator or the distributor at a second interval or more.

8. The slurry mixing apparatus of one of claims 3 to 7, wherein the residue removal part (160) is made of a metal or a silicon material.

9. The slurry mixing apparatus of one of the preceding claims, wherein the agitator (110) comprises an agitating blade having a screw configuration twisted in a vertical direction.

10. The slurry mixing apparatus of one of the preceding claims, wherein the distributor (120) comprises a plurality of distribution blades (121).

11. The slurry mixing apparatus of claim 10, wherein the distribution blades (121) have different diameters from each other.

12. The slurry mixing apparatus of one of claims 10 or 11, wherein a diameter of each of the distribution blades (121) increases from an upper part thereof toward a lower part thereof.

13. The slurry mixing apparatus of claim 10, wherein a ratio of a diameter of a highest one of the distribution blades (121) and a diameter of a lowest one of the distribution blades (121) from among the distribution blades (121) is in a range of 1:1 to 1:10.
